# EUROPÄISCHE PATENTSCHRIFT

(11) **EP 0 802 006 B1**
(45) Veröffentlichungstag und Bekanntmachung des Hinweises auf die Patenterteilung: **12.07.2000**
(21) Anmeldenummer: 97201086.2
(22) Anmeldetag: 11.04.1997
(51) Int. Cl.: B23B 27/04

(54) **Schneidwerkzeug mit Klemmvorrichtung**
Cutting tool with clamping device
Outil de coupe avec dispositif de serrage

(30) Priorität: 18.04.1996 AT 21696
(43) Veröffentlichungstag der Anmeldung: 22.10.1997
(73) Patentinhaber: Plansee Tizit Aktiengesellschaft, 6600 Reutte /Tirol (AT)
(72) Erfinder: Duwe, Jürgen, 6611 Heiterwang (AT); Stricker, Rudolf, 6631 Lermoos (AT)
(74) Vertreter: Lohnert, Wolfgang, Dr.

(56) Entgegenhaltungen:
- EP-A- 0 291 933
- WO-A-95/29026
- DE-B- 1 270 924
- US-A- 5 211 516

## Beschreibung

Die Erfindung betrifft ein Schneidwerkzeug mit einem oder mehreren auswechselbaren Schneideinsätzen, die am Werkzeughalter festklemmbar sind und auf den Auflage- und/oder Klemmflächen Elemente für eine formschlüssige, lagerichtige Positionierung aufweisen.

Bei Schneidwerkzeugen mit auswechselbaren Schneideinsätzen werden die Schneideinsätze mit den unterschiedlichsten Klemmelementen mit dem Werkzeughalter verbunden. Eine weit verbreitete Klemmmethode ist es, die Schneideinsätze mit einem Mittelloch zu versehen und diese mit Hilfe von Schrauben mit geeigneten Kopfformen oder mit unmittelbar an der Wandung des Mittelloches angreifenden Klemmelementen, wie Exzentern oder Kippbolzen, mit dem Werkzeughalter zu verbinden. Andere bekannte Klemmelemente sind z.B. an der Deckfläche der Wendeschneidplatte angreifende Klemmpratzen, die die Verbindung der Schneideinsätze mit dem Werkzeughalter herstellen.

Bei Schneideinsätzen zum Stechen, die in der Regel langgestreckt sind, ist es zur Verbesserung der Klemmung üblich, die Schneideinsätze mit einer konkaven oder konvexen V-förmigen Auflage- und/oder Klemmfläche zu versehen und die Klemmfläche über eine verschraubbare Spannpratze oder mittels federnder Abschnitte des Werkzeughalters bzw. der Aufnahmeklinge durch elastische Verformung dieser Abschnitte mit der notwendigen Klemmkraft zu beaufschlagen.

Da auf modernen Werkzeugmaschinen Stecheinsätze vielfach nicht nur zum Ab- oder Einstechen verwendet werden, sondern auch Oberflächenkonturen durch Längs- oder Plandrehen bearbeitet werden, ist es nicht zu vermeiden, daß derartige Schneideinsätze auch mit seitlichen Druckkräften oder Zugkräften beaufschlagt werden. Für derartige Schneidoperationen ist die Klemmkraft, die auf den Schneideinsatz wirkt oftmals nicht ausreichend, so daß es trotz dieser V-förmigen Auflage- und/oder Klemmflächen zu einem Verschieben oder gar zu einem Herausziehen des Schneideinsatzes aus dem Werkzeughalter kommen kann. Maßabweichungen des zu bearbeitenden Werkstückes, Standzeitverminderungen durch vorzeitigen Verschleiß, Bruch oder Verlust des Schneideinsatzes sowie Beschädigung des Schneidplattensitzes oder der Klemmteile am Werkzeughalter sind die Folge davon.

Derartige Unzulänglichkeiten hinsichtlich einer fallweise nicht ausreichend guten Verbindung zwischen Schneideinsatz und Werkzeughalter haben dazu geführt, daß zusätzlich zu den üblichen Klemmelementen aufeinander abgestimmte Erhebungen und Ausnehmungen in die Kontaktflächen zwischen Schneideinsatz und Werkzeughalter vorgesehen wurden, um einen zusätzlichen Formschluß zwischen Schneideinsatz und Werkzeughalter zu erzielen und dadurch verbesserte Positioniermöglichkeiten sowie eine verbesserte Klemmung der Schneideinsätze am Werkzeughalter zu bewirken. Beispiele für derartige Ausführungen von Schneideinsätzen und Werkzeughaltern sind in der DE-OS 36 17 119, der DE-OS 26 53 222 oder dem DE-GM 92 01 113 beschrieben.

Nachteilig bei diesen bekannten Schneidplattenbefestigungen ist, daß die Herstellung derartiger zusätzlicher formschlüssiger Paßelemente aufwendig ist, da diese sowohl an den Schneidplatten als auch an den Werkzeughaltern vorzusehen sind und genau aufeinander abgestimmt sein müssen, um die für das Schneidwerkzeug geforderten Toleranzen hinsichtlich der Schneidkantenposition zu gewährleisten.

Aufgabe der vorliegenden Erfindung ist es daher, ein Schneidwerkzeug zu schaffen, das eine oder mehrere auswechselbare, am Werkzeughalter festklemmbare Schneideinsätze mit Elementen für eine formschlüssige, lagerichtige Positionierung auf den Auflage- und/oder Klemmflächen aufweist, das die genannten Nachteile vermeidet.

Erfindungsgemäß wird dies durch ein Schneidwerkzeug gemäß Anspruch erreicht, wobei die Elemente derart erhaben ausgebildet sind, daß durch die von der jeweiligen Klemmeinrichtung erzielbare Flächenpressung zur Fixierung der Schneideinsätze eine plastische Verformung der entsprechenden Kontaktflächen am Werkzeughalter erzeugt wird.

Die Erfindung macht sich damit auf neuartige Weise die Gegebenheit zunutze, daß das Material aus dem die Schneideinsätze gefertigt sind, eine größere Härte aufweist, als das Material des Werkzeughalters.
Durch die erfindungsgemäße Ausführung der Elemente, die im Vergleich zu bisher bekannten Elementen wesentlich kleiner dimensioniert sind, ist es nur mehr notwendig, den Schneideinsatz mit erhabenen Elementen zu versehen, was auf einfache Weise durch ein entsprechend geformtes Preßwerkzeug ermöglicht wird.

Die bisher notwendige, aufwendige genaue Einarbeitung der zugehörigen Ausnehmungen in den Werkzeughalter kann vollständig entfallen, da diese auf einfache Weise automatisch lagerichtig beim Festklemmen des Schneideinsatzes am Werkzeughalter durch plastische Deformation erzielt werden. Es war in diesem Ausmaß nicht zu erwarten, daß auch mit Hilfe klein dimensionierter erhabener Elemente allein, eine hervorragende formschlüssige Verbindung von Schneideinsatz und Werkzeughalter erreicht wird, die zudem eine deutliche Verbesserung der Positionierung und Fixierung des Schneideinsatzes gegenüber seitlichen Druckkräften und Zugkräften mit sich bringt. Die genaue Form und Dimensionierung der Erhebungen ist auf die Unterschiede der Härte der für Schneideinsatz und Werkzeughalter verwendeten Materialien, auf die Größe des Schneideinsatzes, sowie auf die Größe der Klemmkraft abzustimmen, was für den Fachmann im Bereich rein handwerklicher Maßnahmen liegt.

Die Erfindung ist nicht nur auf Schneidwerkzeuge mit Schneideinsätzen aus Hartmetall oder anderen überharten Werkstoffen und auf Stahl als Werkstoff für den Werkzeughalter anwendbar, sondern auch auf Schneideinsätze, die ebenso wie der Werkzeughalter aus Stahl hergestellt sind. Wichtig ist nur, daß der Härteunterschied zwischen Schneideinsatz und Werkzeughalter groß genug ist, um eine plastische Verformung des Werkzeughalters zu ermöglichen. Härteunterschiede von mindestens etwa 20 HRC haben sich dabei in der Praxis als notwendig erwiesen.
Weiters ist es sinnvoll, die Elemente möglichst scharfkantig auszuführen. Hinsichtlich ihrer Dimensionierung hat sich in der Praxis bei Verwendung von Hartmetall für den Schneideinsatz ein Überstand im Bereich zwischen 0,08 mm und 0,1 mm über die Auflage- bzw. Klemmfläche als vorteilhaft erwiesen.

Als besonders vorteihafte Form der Elemente haben sich scharfkantige, dachförmige Erhebungen mit einem spitzen Winkel zwischen 60° und 90° bewährt. Ferner schlägt die Erfindung einen Schneideinsatz gemäß Anspruch 3 vor. Derartig ausgeführte Schneideinsätze sind dann in hervorragender Weise auch für Kontur- und Formendrehen geeignet, ohne daß es zu einem Verschieben oder Herausziehen des Schneideinsatzes aus dem Werkzeughalter kommt.
Besonders bewährt hat es sich hierbei, die Auflage- und/oder Klemmfläche der Schneideinsätze mit einer Vielzahl von dachförmigen Erhebungen auszuführen, die parallel zueinander und senkrecht zur Längsachse des Schneideinsatzes angeordnet sind.

Im folgenden wird die Erfindung an Hand von Figuren näher erläutert. Es zeigen:
- Figur 1: ein erfindungsgemäßes Schneidwerkzeug in Form eines Stechwerkzeuges in Schrägansicht
- Figur 2: den Schneideinsatz für das Stechwerkzeug nach Figur 1 in Draufsicht
- Figur 3: den Schneideinsatz nach Figur 2 in Seitenansicht
- Figur 4: den Schneideinsatz nach den Figuren 2 und 3 in Stirnansicht
- Figur 5: ein vergrößertes Detail der Seitenansicht der Berührungsflächen zwischen Werkzeughalter und Schneideinsatz des Stechwerkzeuges nach Figur 1 im Schnitt

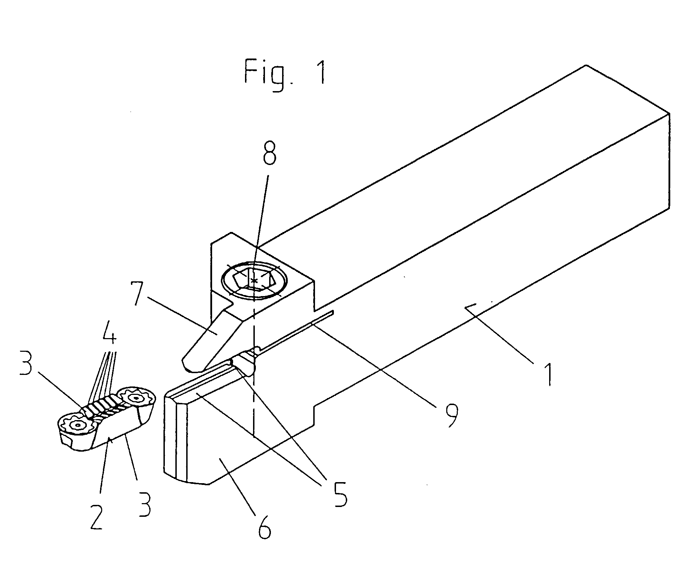

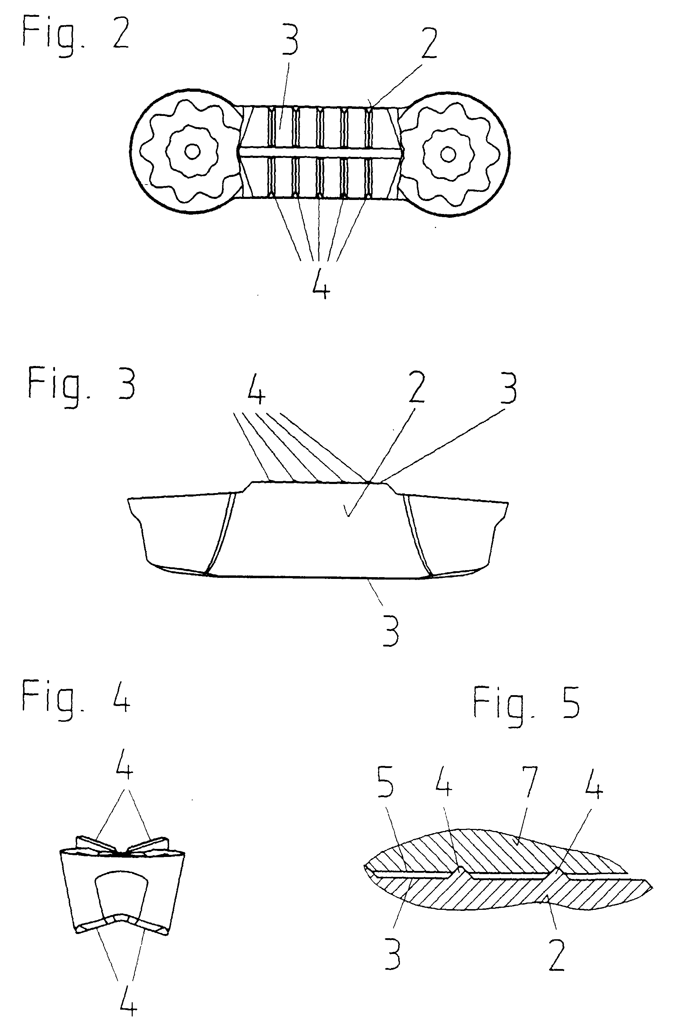

Figur 1 zeigt ein erfindungsgemäßes Stechwerkzeug, bestehend aus einem Werkzeughalter -1- und einem wendbaren Schneideinsatz -2- aus Hartmetall. Der klingenförmige vordere Abschnitt des Werkzeughalters -1- weist eine Ausnehmung zur Aufnahme des Schneideinsatzes -2- auf, die am Ende in einen Schlitz -9- übergeht. Dadurch wird ein starrer Stützabschnitt -6- und eine federnde Klemmpratze -7- gebildet. Beide Abschnitte -6- und -7- des Werkzeughalters -1- weisen konvexe V-förmige Kontaktflächen -5- zur Aufnahme des Schneideinsatzes auf. Die Oberfläche dieser Kontaktflächen -5-ist glatt ohne Ausnehmungen ausgeführt.
Wie auch in den Figuren 2, 3 und 4 zu erkennen ist, weist der Schneideinsatz - 2--entsprechend konkav geformte V-förmige Auflage- und Klemmflächen -3- auf. Sowohl die Auflagefläche -3- als auch die Klemmfläche -3- sind mit Elementen, das sind im Querschnitt dachförmig ausgeführte Erhebungen -4- quer zur Längsachse des Schneideinsatzes -2-, ausgeführt. Die Ergebungen -4- sind scharfkantig mit einem spitzen Winkel von 90° ausgeführt und weisen eine Höhe von etwa 0,08 mm, ausgehend von den Auflage- und Klemmflächen -3- auf.
Zur Klemmung des Schneideinsatzes -2- im Werkzeughalter -1- wird der Schneideinsatz -2- bis zum Anschlag in die Ausnehmung geschoben. Durch Verschrauben der Klemmschraube -8- mit dem Werkzeughalter -1- drückt die Klemmpratze -7- auf die Klemmfläche -3- des Schneideinsatzes -2- und damit die Auflagefläche -3- an die Kontaktfläche -5- des Stützabschnittes -6-. Durch die Klemmkraft werden, wie in Figur 5 im Detail für die Kontaktfläche -5- der Klemmpratze -7- und die Klemmfläche -3- des Schneideinsatzes -2- gezeigt, die Erhebungen -4- des Schneideinsatzes -2- in die Kontaktflächen -5- von Klemmpratze -7- und Stützabschnitt -6- hineingedrückt und verformen diese plastisch. Auf diese Weise entstehen in den Kontaktflächen -5- sichtbar ausgebildete V-förmige Nuten, die einerseits tief genug, sind den Schneideinsatz -2- gegen seitliche Kräfte sowie Zugkräfte aus der Ausnehmung heraus sicher zu stabilisieren und andererseits nur so tief sind, daß der Schneideinsatz nach Lösen der Klemmschraube -8- problemlos aus der Aufnahme entfernt werden kann.
Es ist darauf zu achten, daß beim erstmaligen Festklemmen des Schneideinsatzes -2- dieser bis zum Anschlag eingeschoben und damit richtig positioniert ist, um die Kerben in den Kontaktflächen -5- an den richtigen Stellen einzudrücken. Bei einem Wechsel des Schneideinsatzes -2- wird der neue durch die nunmehr in den Kontaktflächen -5- bereits vorhandenen Kerben automatisch richtig positioniert.

In einem Versuch zur Ermittlung der Auszugskraft der Wendeschneidplatten aus dem Werkzeughalter wurden zwei baugleiche Stechwerkzeuge einmal in der erfindungsgemäßen Ausführung mit Schneideinsätzen mit dachförmigen Erhebungen entsprechend der Figuren 2 bis 3 und einmal mit Schneideinsätzen mit glatten Klemm- und Auflageflächen auf einer Zugversuchsanlage miteinander verglichen.
Die einzelnen Wendeschneidplatten wurden jeweils in den Werkzeughaltern durch Festziehen der Klemmschrauben mit einem Anzugsmoment von 8 Nm festgeklemmt. Die Werkzeughalter wurden festgespannt und die jeweiligen Schneideinsätze mit einer Auszugsgeschwindigkeit von 1 mm/min aus dem Werkzeughalter gezogen.
Beim erfindungsgemäßen Schneidwerkzeug ergaben sich im Schnitt Auszugskräfte der Schneideinsätze aus dem Werkzeughalter von etwa 1350 N, während bei den Schneideinsätzen ohne dachförmige Erhebungen Auszugskräfte im Schnitt von etwa 700 N gemessen wurden. Durch die erfindungsgemäßen dachförmigen Erhebungen konnten die Auszugskräfte also nahezu auf den doppelten Wert erhöht werden.

## Patentansprüche

1. Schneidwerkzeug mit einem oder mehreren auswechselbaren Schneideinsätzen (2), die am Werkzeughalter festklemmbar sind und auf den Auflage- und/oder Klemmflächen (3) Elemente für eine formschlüssige, lagerichtige Positionierung aufweisen,
**dadurch gekennzeichnet,**
daß die Elemente (4) derart erhaben ausgebildet sind, daß durch die von der jeweiligen Klemmeinrichtung aufgebrachte Flächenpressung zur Fixierung der Schneideinsätze (2) eine plastische Verformung der Kontaktflächen am Werkzeughalter (1) erzeugt wird.

2. Schneidwerkzeug nach Anspruch 1, dadurch gekennzeichnet, daß die Elemente scharfkantige, dachförmige Erhebungen mit einem spitzen Winkel zwischen 60° und 90° sind.

3. Schneideinsatz für ein Schneidwerkzeug, der an einem Werkzeughalter festklemmbar ist und auf Auflage- und/oder Klemmflächen (3) Elemente (4) für eine formschlüssige, lagerichtige Positionierung aufweist, dadurch gekennzeichnet, daß er ein Stecheinsatz mit V-förmiger Auflage- und/oder Klemmfläche ist, daß die Elemente scharfkantige, dachförmige Erhebungen mit einem spitzen Winkel zwischen 60° und 90° sind, wobei durch die von der jeweiligen Klemmeinrichtung aufgebrachte Flächenpressung zur Fixierung des Einsatzes eine plastische Verformung der Kontaktflächen am Werkzeughalter erzeugt wird.

4. Schneideinsatz nach Anspruch 3, dadurch gekennzeichnet, daß die Auflage- und/oder Klemmfläche mit einer Vielzahl von Erhebungen ausgeführt ist, die parallel zueinander und senkrecht zur Längsachse des Schneideinsatzes angeordnet sind.

## Claims

1. A cutting tool with one or more replaceable cutting inserts (2), which can be securely clamped onto the tool holder and on the bearing and or clamping surfaces (3) comprise elements for positive-locking, position-correct positioning, characterised in that the elements (4) are raised in such a manner that a plastic deformation of the contact surfaces on the tool holder (1) is generated by the surface pressure applied by the respective clamping device in order to fix the cutting insert (2).

2. A cutting tool according to claim 1, characterised in that the elements are sharp-edged, roof-shaped raised sections with an acute angle of between 60° and 90°.

3. A cutting insert for a cutting tool, which can be securely clamped onto a tool holder and on bearing and/or clamping surfaces (3) comprises elements (4) for positive-locking, position-correct positioning, characterised in that said cutting insert is a plug insert with a V-shaped bearing and/or clamping surface, the elements are sharp-edged, roof-shaped raised sections with an acute angle of between 60° and 90°, a plastic deformation of the contact surfaces on the tool holder being generated by the surface pressure applied by the respective clamping device in order to fix the insert.

4. A cutting insert according to claim 3, characterised in that the bearing and/or clamping surface is constructed with a plurality of raised sections, which are arranged parallel to one another and perpendicular to the longitudinal axis of the cutting insert.

## Revendications

1. Outil de coupe comportant une ou plusieurs plaquettes de coupe interchangeables (2) qui peuvent être serrées de façon fixe sur un porte-outil et comportent, sur les surfaces d'application ou de serrage (3), des éléments destinés à un positionnement en engagement positif à un emplacement correct,caractérisé en ce queles éléments (4) sont configurés en relief d'une manière telle qu'une déformation plastique des surfaces de contact sur le porte-outil (1) est engendrée par la pression superficielle exercée par le dispositif respectif de serrage pour fixer les plaquettes de coupe (2).

2. Outil de coupe selon la revendication 1, caractérisé en ce que les éléments sont des reliefs à arête aiguë, en forme de toit, à angle aigu compris entre 60 et 90°.

3. Plaquette de coupe pour outil de coupe qui peut être serrée sur un porte-outil et comporte, sur des surfaces (3) d'appui ou de serrage, des éléments (4) destinés à un positionnement en engagement positif à un emplacement correct, caractérisée en ce qu'elle est une plaquette de perçage à surface d'appui et/ou de serrage en forme de V, en ce que les éléments sont des reliefs à arête aiguë, en forme de toit, à angle aigu compris entre 60 et 90°, une déformation plastique des surfaces de contact sur le porte-outil étant engendrée par la pression superficielle exercée par le dispositif respectif de serrage pour fixer la plaquette.

4. Plaquette de coupe selon la revendication 3, caractérisée en ce que la surface d'appui et/ou de serrage comporte une multiplicité de reliefs qui sont agencés parallèlement les uns aux autres et perpendiculairement à l'axe longitudinal de la plaquette de coupe.
